Europäisches Patentamt

European Patent Office

Office européen des brevets

(19)

(11) EP 1 164 711 A2

(12) **EUROPEAN PATENT APPLICATION**

(43) Date of publication:
**19.12.2001 Bulletin 2001/51**

(51) Int Cl.7: **H04B 1/707**, H04B 7/06

(21) Application number: **01304979.6**

(22) Date of filing: **07.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **14.06.2000 JP 2000178416**

(71) Applicant: **SONY CORPORATION**
**Tokyo (JP)**

(72) Inventor: **Ito, Katsutoshi, c/o Sony Corporation**
**Tokyo (JP)**

(74) Representative: **Nicholls, Michael John**
**J.A. KEMP & CO. 14, South Square Gray's Inn**
**London WC1R 5LX (GB)**

(54) **Receiving apparatus for spread spectrum transmission antenna diversity**

(57)    In case of estimating propagation path characteristics of signals sent through different propagation paths from a plurality of antennas in transmission antenna diversity configured to transmit data from such antennas, the process of estimating properties of individual propagation paths and demodulating data by despreading pilot signals, separating each pilot signal through each propagation path from received pilot signals and filtering the pilot signals to estimate properties of individual propagation paths can be simplified to contribute to reduction of the circuit size. That is, by using that a pilot signal (P1) and a pilot signal (P2) intersect orthogonally not only in every two symbols but also in every four or eight symbols, such pilot signals (P1, P2) can be separated by addition or subtraction of data of L symbols (four symbols or eight symbols), which will intersect orthogonally. It results in being equivalent to averaging such pilot signals (P1, P2) separated in every two symbols, and therefore, separation of pilot signals and filtering can be achieved simultaneously. Further, if despread is executed by (MxL) chips, despread of pilot signals, separation of pilot signals and filtering can be executed simultaneously.

Fig. 1

EP 1 164 711 A2

**Description**

This invention relates to a receiving apparatus for signals simultaneously transmitted from a plurality antennas in a CDMA (code division multiple access) wireless mobile telephone system, for example.

In case of effecting data communication through a wireless system, for example, of which characteristics of the propagation path cannot be estimated, it is normally employed to transmit predetermined known data (hereinafter called pilot signals) in addition to information data to be transmitted, such that, in the receiver side, pilot signals are used to estimate propagation paths and demodulate the information data. This method is widely used in wireless mobile telephone systems, and its standardization is progressed by ITU (International Telecommunication Union) toward its use as the next-generation wireless mobile telephone system. Its applications to IMT-2000 or W-CDMA (wideband-code division multiple access) mobile systems are expected.

In systems using pilot signals for estimation of propagation paths, it is necessary upon receipt to perform procedures of

(a) despreading pilot signals;
(b) filtering the pilot signals to remove noise components;
(c) multiplying a complex conjugate to obtain an estimated value of the transmission path; and
(d) demodulating the received data by using the estimated value obtained.

Further, in the next-generation mobile communication system, it is expected that the transmission antenna diversity technique for transmitting data from a plurality of antennas is employed to improve the reception characteristics.

If transmission antenna diversity is employed, propagation path characteristics of different propagation paths from respective antennas have to be estimated. Therefore, pilot signals for estimation of respective propagation paths are sent from individual antennas for individual outputs. Thus, on the part of a receiver, it is necessary to separate each pilot signal of each propagation path from other received pilot signals to actually estimate the characteristics of each propagation path.

As reviewed above, systems configured to estimate transmission paths by using pilot signals need procedures such as despread of pilot signals, filtering of the pilot signals, calculation of estimated values of the transmission paths, and so forth. Additionally, when they use antenna diversity, they need the procedure of separating each pilot signal. They therefore involve the problem that the circuit scale inevitably increases.

According to the first aspect of the invention, there is provided a receiving apparatus in a system configured to take procedures of:

on the part of a transmitter, coding data signals into a first series and a second series and spreading each series with data spread codes;
spreading two pilot signals individually for the first series and the second series into pilot signal spread codes for individual first and second series;
combining the spread data signal of the first series and the spread pilot signal of the first series, and transmitting them from a first antenna;
combining the spread data signal of the second series and the spread pilot signal of the second series, and transmitting them from a second antenna;
on the part of a receiver, despreading the received data signals with data spread codes;
despreading the received pilot signals with the pilot spread codes, and separating components of first series pilot signal and components of the second series pilot signal from a despread output of the pilot signal;
obtaining an estimation value of the property of the first series and an estimation value of the property of the second series from components of the first series pilot signal and the second series pilot signal; and
demodulating the despread data signals by using the estimated value of the property of the first series and the estimated value of the property of the second series, comprising:

data despread means for executing despread of the received data signals;
pilot signal despread means for executing despread of the received pilot signals;
pilot separation means using orthogonality between the first series pilot signal and the second series pilot signal to separate components of the first series pilot signal and components of the second series pilot signal from outputs of the pilot signal despread means and to obtain an estimated value of the property of the first series and an estimated value of the property of the second series from the components of the first series pilot signal and the components of the second series pilot signal; and
data demodulating means using the estimated value of the property of the first series and the estimated of the property of the second series obtained by the pilot separation means to demodulate the despread data signals, the pilot separation means being configured to separate the components of the first series pilot signal and components of the second pilot signal component by using pilot signals of patterns having the number of symbol L where L is the number of symbols per which the first series pilot signal and the second series pilot signal intersect orthogonally.

According to the second aspect of the invention, there is provided a receiving apparatus in a system configured to take procedures of:

on the part of a transmitter, coding data signals into a first series and a second series and spreading each series with data spread codes;
spreading two pilot signals individually for the first series and the second series into pilot signal spread codes for individual first and second series;
combining the spread data signal of the first series and the spread pilot signal of the first series, and transmitting them from a first antenna;
combining the spread data signal of the second series and the spread pilot signal of the second series, and transmitting them from a second antenna;
on the part of a receiver, despreading the received data signals with data spread codes;
despreading the received pilot signals with the pilot spread codes, and separating components of first series pilot signal and components of the second series pilot signal from a despread output of the pilot signal;
obtaining an estimation value of the property of the first series and an estimation value of the property of the second series from components of the first series pilot signal and the second series pilot signal; and
demodulating the despread data signals by using the estimated value of the property of the first series and the estimated value of the property of the second series, comprising:

data spread means for executing despread of the received data signals;
pilot signal despread means for executing despread of the received pilot signals, separating components of first series pilot signal and components of the second series pilot signal from a despread output of the pilot signal, and obtaining an estimation value of the property of the first series and an estimation value of the property of the second series from components of the first series pilot signal and the second series pilot signal; and
data demodulating means using the estimated value of the property of the first series and the estimated of the property of the second series obtained by the pilot separation means to demodulate the despread data signals, the pilot signal despread means being configured to execute despread of the pilot signals and separate the components of the first series pilot signal and the components of the second pilot signal from each other by multiplying a pilot signal spread code having the length L times the spread code length and accumulating multiplication outputs in the amount of the length L times the spread code length where L is the number of symbols per which the first series pilot signal and the second series pilot signal intersect orthogonally.

The hereinafter described embodiments of the invention to provide a receiving apparatus that can simplifies procedures of dispreading pilot signals, separating each of received pilot signals through different propagation paths, filtering the pilot signals,
estimating characteristics of individual propagation paths and demodulating data, in the case where characteristics of different propagation paths used to transmit signals from different antennas should be estimated in transmission antenna diversity configured to transmit data from a plurality of antennas, and thereby facilitates the size of the circuit.

Preferably the following features are present.

The pilot signal P1 and the pilot signal P2 orthogonally intersect per every two symbols. Further, the pilot signal P1 and the pilot signal P2 are related to orthogonally intersect not only per every two symbols but also per every four symbols, every eight symbols, every 16 symbols, and so on.

By utilizing that the pilot signal P1 and the pilot signal P2 orthogonally intersect per every four symbols, every eight symbols, an so forth, the pilot signal P1 and the pilot signal P2 can be separated by addition or subtraction of data of L symbols (four symbols, eight symbols, and so on) which will intersect orthogonally. This results in being equivalent to averaging the pilot signal P1 and the pilot signal P2 separated per every two symbols, and separation and filtering of pilot signals can be executed simultaneously.

Upon despreading pilot signals, if the despread is performed in (Mx2) chips instead of M chips, then it is possible to perform processing equivalent to addition or subtraction of consecutive two symbols obtained by despread, and therefore, despread and separation of pilot signals can be executed simultaneously. Further, if despread is performed in (MxL) chips, then despread of pilot signals, separation of pilot signals and filtering can be effected simultaneously.

Explained below by way of example are embodiments of the invention with reference to the drawings, in which:

Fig. 1 is a block diagram used for explanation of a basic system using pilot signals;
Fig. 2 is a schematic diagram used for explanation of QPSK mapping;
Fig. 3 is a block diagram used for explanation of a data spread section;
Fig. 4 is a block diagram used for explanation of a pilot signal spread section;
Fig. 5 is a block diagram used for explanation of a data despread section;
Fig. 6 is a block diagram used for explanation of a pilot despread section;
Fig. 7 is a block diagram of a filter;
Fig. 8 is a block diagram used for explanation of antenna diversity;
Fig. 9 is a block diagram used for explanation of a basic system using pilot signals in case of antenna diversity;
Fig. 10 is a block diagram used for explanation of a receiver in a basic system using pilot signals in case of antenna diversity;
Fig. 11 is a schematic diagram used for explanation of separation of pilot signals in a basic system using pilot signals in case of antenna diversity;
Fig. 12 is a block diagram used for explanation of a first embodiment of the invention;
Fig. 13 is a block diagram used for explanation of a pilot separation section in the first embodiment of the invention;
Fig. 14 is a schematic diagram used for explanation of a pilot separation section in the first embodiment of the invention;
Fig. 15 is a block diagram used for explanation of a second embodiment of the invention;
Fig. 16 is a block diagram used for explanation of a pilot despread section in the second embodiment of the invention; and
Fig. 17 is a schematic diagram used for explanation of a pilot despread section in the second embodiment of the invention.

The invention is suitable for application to systems configures to estimate characteristics of propogation paths by using pilot signals. First explained is a system configured to estimate propagation paths by using such pilot signals.

(1) Wireless System Using Pilot Signals:

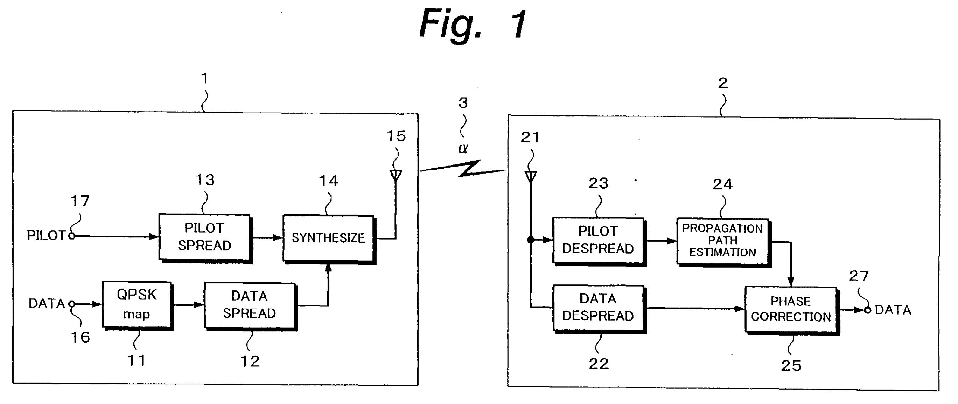

Fig. 1 shows a basic structure of a wireless system using pilot signals. In Fig. 1, reference numeral 1 denotes a transmitter-side apparatus, and 2 denotes a receiver-side apparatus. The transmitter-side apparatus 1 is typically a base station of a wireless mobile telephone system, and the receiver-side apparatus 2 is typically a portable terminal.

In Fig. 1, the transmitter 1 includes a QPSK (Quadrature Phase Shift Keying) map section 11, data spread section 12, pilot spread section 13, synthesizing section 14 and transmission antenna 15.

Transmission data is supplied to an input terminal 16. The transmission data is binary data that takes 1 or -1. The transmission data is supplied to the QPSK map section 11. The QPSK map section 11 maps the input data into data on the I axis and data on the Q axis.

Data symbols mapped by the QPSK map section 11 are supplied to data spread section 12. In the data spread section 12, transmission data is spectrally spread with a data spread code. Output of the data spread section 12 is supplied to the synthesizing section 14.

A pilot signal is supplied to the input terminal 17. The pilot signal is supplied to the pilot spread section 13. In the pilot spread section 13, the pilot signal is spectrally spread with a pilot spread signal.

In the synthesizing section 14, the transmission data spread with the data spread code and the pilot signal spread with the pilot signal spread code are combined. Output of the combining section 14 is output from the antenna 15.

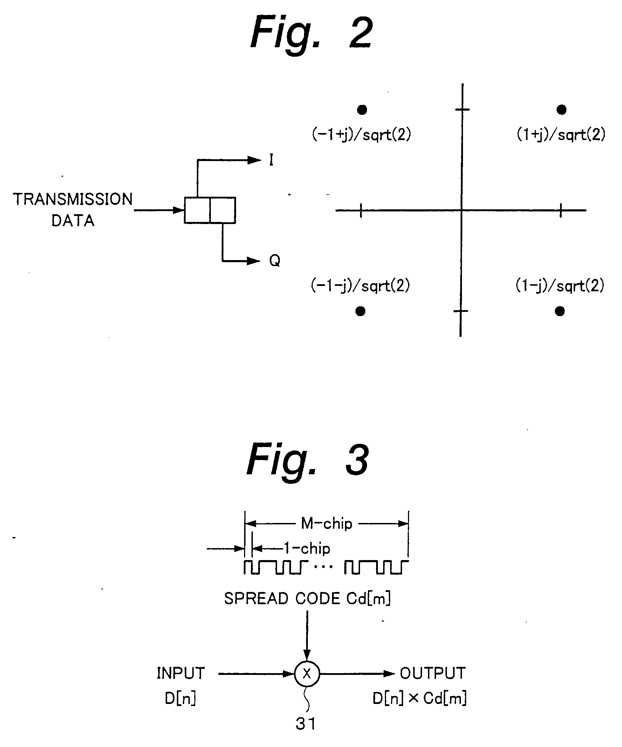

In the transmitter 1 shown in Fig. 1, input data from the input terminal 16 is mapped by the QPSK map section 11 on a complex plane in the manner shown in Fig. 2. That is, the first introduced bit is mapped on the I axis whereas the next introduced data is mapped on the Q axis.

Output of the QPSK map section 11 is supplied to the data spread section 12 and spectrally spread by the data spread section 12. The data spread section 12 is configured to spectrally diffuse input data D[n] by multiplying it by data spread code Cd[m] as shown in Fig. 3. The data spread code Cd[m] is a M-chip code.

From the data spread section 12, a signal spectrally spread from the input data D[n] by the data spread code Cd[m]

$$D[n] \times Cd[m]$$

is output.

The pilot signal from the input terminal 17 is supplied to the pilot spread section 13, and spectrally spread there. The pilot signal is a $((1+j)/\sqrt{2})$ QPSK symbol. The pilot signal is spectrally spread by the pilot spread section 13.

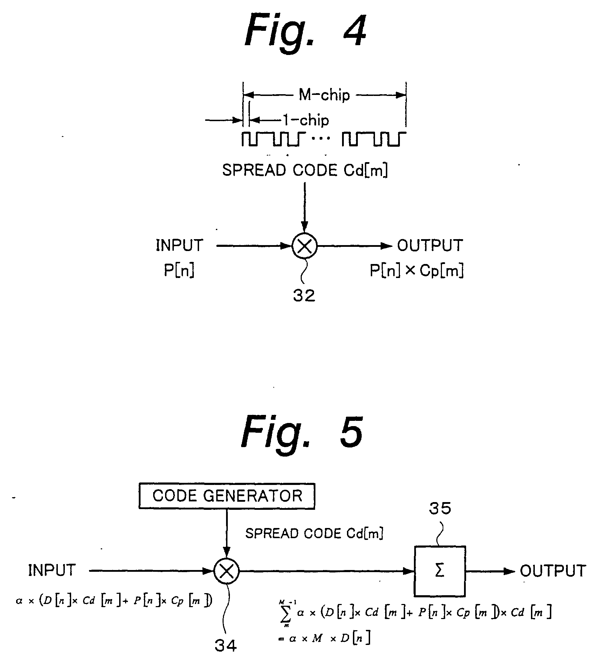

The pilot spread section 13 is configured to execute spectral spread by multiplying the input pilot signal P[n] by the pilot spread code Cp[m] in a multiplier 32 as shown in Fig. 4. The pilot spread code Cp[m] is a M-chip code.

The data spread code Cd[m] and the pilot spread code Cp[m] intersect orthogonally with each other, and satisfy

$$\sum_{m=0}^{M-1} Cp[m] \times Cd[m] = 0$$

From the pilot spread section 13, the signal spectrally spread from the input pilot signal P[n] by the pilot spread code Cp[m]

$$P[n] \times Cp[m]$$

is output.

Thus, from the transmitter 1, the transmission data, which is mapped on a complex plane and spectrally spread with the data spread code, and the pilot signal, which is the $((1+j)/\sqrt{2})$ QPSK symbol and spectrally spread with the pilot signal spread code, are sent out simultaneously.

The signal transmitted from the transmitter 1 reaches the receiver 2 through a propagation path 3. The signal from the transmitter 1 is received by the receiver 2.

The receiver 2 includes a reception antenna 21, data despread section 22, pilot despread section 23, propagation path estimation section 24, phase correction section 25 and a judge section 26.

The signal received at the reception antenna 21 is supplied to the data despread section 22 and the pilot signal despread section 23. In the data despread section 22, despread of the data signal is executed. Output of the data despread section 22 is supplied to the phase correction section 25.

In the pilot signal despread section 23, the pilot signal undergoes despread. Output of the pilot spread section is supplied to the propagation path estimation section 24.

The propagation estimation section 24 is configured to obtain a propagation path estimation value by multiplying the received pilot signal output from the pilot despread section 23 by its complex conjugate. The received pilot signal contains noise components due to phasing, or the like. For the purpose of removing such noise components, the propagation estimation section 24 executes filtering of the pilot signal.

Output of the phase correction section 25 is supplied to the judge section 16. In the judge section 26, opposite mapping is executed in accordance with the QPSK mapping. As a result, the QPSK signal is demodulated to binary data. The demodulated data is output from the output terminal 27.

In the receiving apparatus 2 shown in Fig. 1, the data despread section 22 uses a spread code similar to the spread code used for data spread upon transmission to oppositely spread data.

Fig. 5 shows configuration of the data despread section 22. As already explained, from the transmitter 1, the signal spectrally spread from the data D[n] with the data spread code Cd[m], namely,

$$D[n] \times Cd[m]$$

and the signal spectrally spread from the pilot signal P[n] with the pilot spread code Cp[m], namely,

$$P[n] \times Cp[m]$$

are output simultaneously.

The signal from the transmitter 1 reaches the receiver 2 through the propagation path 3. Therefore, if the property of the propagation path 3 is $\alpha$, the signal received at the receiver 2 is

$$\alpha \times (D[n] \times Cd[m] + P[n] \times Cp[m])$$

This received signal (α x (D[n] x Cd[m] + P[n] x Cp[m])) and the data spread code Cd[m] are multiplied in the multiplier 34, and outputs of the multiplier 34 are accumulated in an accumulator 35. From the accumulator 35,

$$\sum_{m}^{M-1} \alpha \times \big( D[n] \times Cd[m] + P[n] \times Cp[m] \big) \times Cd[m] = a \times M \times D[n]$$

is obtained as the data spread output.

The pilot despread section 23 uses a spread code similar to the spread code used for spread of the pilot signal upon transmission to despread the pilot signal.

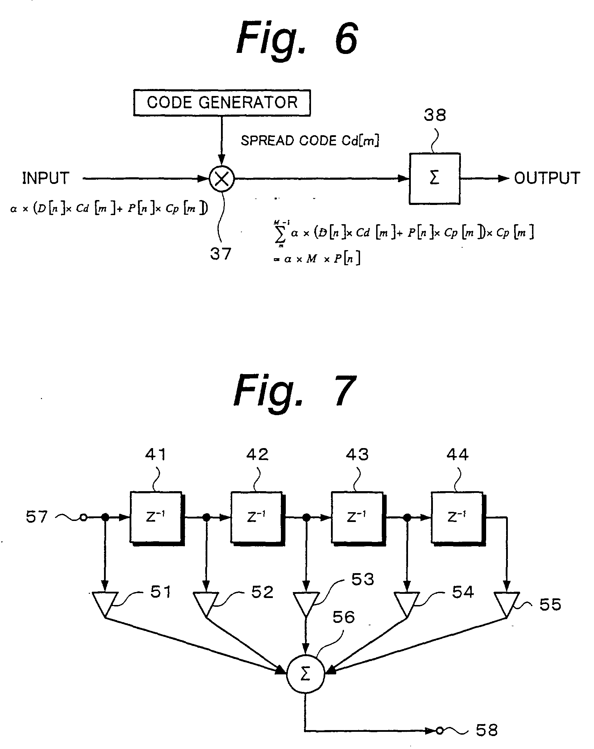

Fig. 6 shows configuration of the pilot despread section 23. If the property of the propagation path 3 is α, then the signal received at the receiver 2 is

$$\alpha \times (D[n] \times Cd[m] + P[n] \times Cp[m])$$

This received signal (α x (D[n] x Cd[m] + P[n] x Cp[m])) and the pilot spread code Cp[m] are multiplied in the multiplier 37, and outputs of the multiplier 37 are accumulated in an accumulator 38. From the accumulator 38,

$$\sum_{m}^{M-1} \alpha \times \big( D[n] \times Cd[m] + P[n] \times Cp[m] \big) \times Cp[m] = a \times M \times P[n]$$

is obtained.

The property α of the propagation path 3 contains noise components due to influences of fading, or the like. When using "noise" to express such noise components at the output of the data despread section 22 and at the output of the pilot despread section 23, output at the data despread section 22, r_d[n], and output at the pilot despread section 23, r_p[n] are

$$r\_d[n] = \alpha \times M \times D[n] + noise$$

$$r\_p[n] = \alpha \times M \times P[n] + noise$$

where M=spread code length

For the purpose of removing such noise components, the propagation path estimation section 24 executes filtering. This filtering can be realized by using, for example, a FIR low-pass-filter as shown in Fig. 7.

As shown in Fig. 7, the FIR low-pass-filter includes delay elements 41 through 44, multipliers 51 through 55, and adder 56. An input signal is supplied to the input terminal 57, and tap outputs are obtained from between respective stages of serially connected delay elements. These tap outputs are multiplied by a coefficient in the multipliers 51 through 55 and supplied to the adder 56. A filtering output is obtained from the output of the adder 56. The filtering output is output from the output terminal 58.

In the propagation path estimation section 24, a complex conjugate P[n]* of the pilot signal the filtered is multiplied on the pilot signal LPF (r_o[n]). As a result, a propagation path estimation value is obtained as follows.

EQUATION 7

$$\hat{\alpha} = P[n]^* \times LPF\big(r\_p[n]\big)$$

$$= P[n]^* \times \big(\alpha \times M \times P[n] + N\big)$$

$$= \alpha \times M + N$$

where LPF()indicates passing through the filter, and N is noise components after filtering.

This propagation path estimation value is supplied to the phase correction section 25. In the phase correction section 25, the propagation path property contained in the data despread section 22 is removed by using the propagation path estimation value.

EQUATION 8

$$data\,[n] = (\alpha \times d[n] + noise\ ) \times \hat{\alpha}^{\bullet}$$
$$= M \times \alpha \times \alpha^{\bullet} \times d[n] + M \times \alpha^{\bullet} \times noise + \alpha \times d[n] \times N + noise \times N$$
$$\cong A \times M \times d[n]$$
$$where\,A = \alpha \times \alpha^{\bullet}$$

In this manner, the propagation path property contained in the output of the data despread section 22 is removed in the phase correction section 25, based on the propagation path estimation value from the propagation path estimation section 24. Output of the phase correction section 25 is supplied to the judge section 26, oppositely mapped there in accordance with the QPSK mapping, and demodulated into binary data. The demodulated data is output from the output terminal 27.

(2) Wireless System Using Antenna Diversity

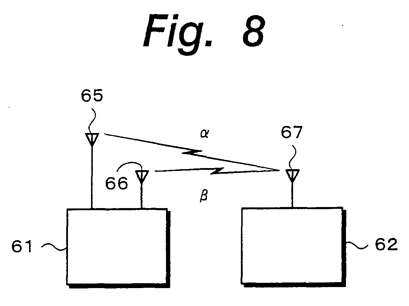

Next explained is a system using antenna diversity. Fig. 8 shows configuration of a wireless communication system in case of using two transmission antennas. The wireless communication system includes a transmitter 61, receiver 62 and propagation paths 63, 64.

In Fig. 8, a signal from the transmitter 61 is transmitted from two antennas 65, 66. The signal from the antenna 65 is transmitted through the propagation path 63 and received at the antenna 67 of the receiver 62. The signal from the antenna 66 is transmitted through the propagation path 64 and received at the antenna 67 of the receiver 62.

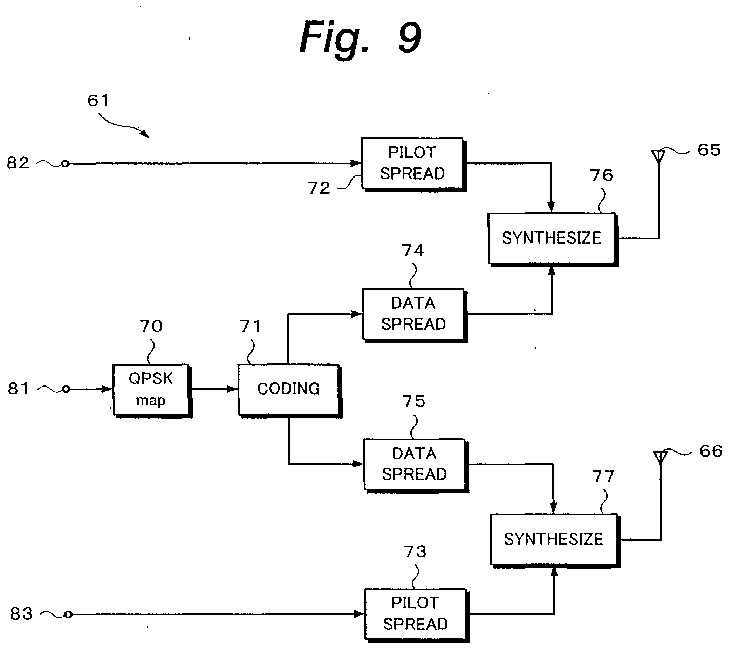

Fig. 9 shows configuration of the transmitter 61. The transmitter 61 includes a QPSK map section 70, data coding section 71, pilot spread sections 72, 73, data spread sections 74, 75, synthesizing sections 76, 77, and transmission antennas 65, 66.

The input terminal 81 is supplied with transmission data. The transmission data is binary data that takes 1 or -1. The QPSK map section 70 maps the transmission on the I axis and the Q axis. The data symbol mapped by the QPSK map section 70 is supplied to the coding section 71.

The coding section 71 is configured to change the QPSK-mapped complex data symbol into orthogonal codes.

Output of the coding section 71 is supplied to the data spread sections 74, 75. The transmission data is spectrally spread in the data spread sections 74, 75 by using a data spread code.

Output of the data spread section 74 is supplied to the synthesizing section 76. Output of the data spread section 75 is supplied to the synthesizing section 77.

The input terminals 82, 83 are supplied with pilot signals. The pilot signal supplied to the input terminal 82 and that supplied to the input terminal 83 intersect orthogonally per every two symbols.

The pilot signal from the input terminal 82 is supplied to the pilot spread section 72. The pilot signal from the input terminal 83 is supplied to the pilot spread section 73.

The pilot spread section 72 spectrally spread the one of the pilot signals by using one of pilot spread codes. The pilot spread section 73 spectrally spread the other pilot signal by using the other pilot spread code. One and the other of the pilot signals intersect orthogonally per every two symbols.

Output of the pilot spread section 72 is supplied to the synthesizing section 76. Output of the pilot spread section 73 is supplied to the synthesizing section 77.

The synthesizing section 76 combines the transmission data, having been coded by the coding section 71 and spread by the data spread section 74 with the data spread code, and the pilot signal, having been spread by the pilot spread section 72 with the pilot signal spread code. The combined output of the synthesizing section 76 is output from the antenna 65.

The synthesizing section 77 combines the transmission data, having been coded by the coding section 71 and spread by the data spread section 75 with the data spread code, and the pilot signal, having been spread by the pilot spread section 73 with the pilot signal spread code. The combined output of the synthesizing section 77 is output from the antenna 66.

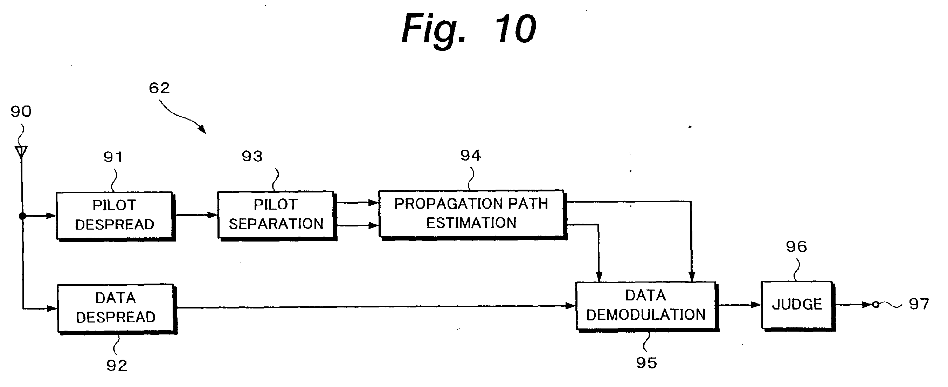

Fig. 10 shows configuration of the receiver 62. As shown in Fig. 8, the signals transmitted from the antennas 65, 66 of the transmitter 61 reach the receiver 62 through the propagation paths 63, 64, and the receiver 62 receives the signals from the transmitter 61.

In Fig. 10, the receiver 62 includes a reception antenna 90, pilot despread section 91, data despread section 92, pilot separation section 93, propagation path estimation section 94, data demodulating section 95, and judge section 96.

The signal received at the reception antenna 90 is supplied to the data despread section 92 and pilot despread section 91. The data despread section 92 despreads the data signal. Output of the data despread section 92 is supplied to the data demodulating section 95.

The pilot signal despread section 91 despreads the pilot signal. Output of the pilot despread section 91 is supplied to the pilot separation section 93. In the pilot separation section 93, the received signal of the pilot signal sent through the propagation path 63 and the received signal of the pilot signal sent through the propagation path 64 are separated.

Output of the pilot separation section 93 is supplied to the propagation path estimation section 94, and their complex conjugates are multiplied to form respective propagation path estimation values. The estimation value of the propagation path 63 and that of the propagation path 64 are supplied to the data demodulating section 95.

In the data demodulating section 95, transmission data symbols are demodulated by using the estimation values obtained in the propagation path estimation section 94.

Output of the data demodulating section 95 is supplied to the judge section 96. The judge section 96 executes opposite mapping in conformity with the QPSK mapping. As a result, the QPSK signal is demodulated into binary data. The demodulated data is output from the output terminal 97.

In the transmitter 61 shown in Fig. 9, the coding section 71 changes QPSK-mapped complex data symbols into orthogonal codes by each symbol.

That is, when input symbols are D[m] and D[m+1], the coding section 71 issues outputs

$$D[m], D[m+1]$$

to the data spread section 74, and issues outputs

$$-D[m+1]^*, D[m]^*$$

to the data spread section 75.

In the receiver 62 shown in Fig. 10, data is despread in the data despread section 92 with the data spread code. Output from the data despread section 92 becomes

$$r\_d[n]= \alpha \times d[n] + \beta \times d[n+1]^* + noise$$

under influences of the property $\alpha$ of the propagation path 63 from the antenna 65 and the property $\beta$ of the propagation path 64 from the antenna 66.

The pilot signal supplied to the input terminal 82 and the pilot signal supplied to the input terminal 83 intersect orthogonally per every two symbols. That is, if the pilot signal supplied to the input terminal 82 is P1 and the pilot signal supplied to the input terminal 83 is P2, they satisfy

$$Corr[n] = \sum_{i=0}^{l} P1[n+i]^* + noise$$

In the receiver 62 shown in Fig. 10, the pilot signal is despread by the pilot despread section 91 by using the pilot signal spread code. Output from the pilot despread section 91 becomes

$$r\_p[n]= \alpha \times P1[n] + \beta \times P2[n] + noise$$

under influences of the property $\alpha$ of the propagation path 63 from the antenna 65 and the property $\beta$ of the propagation

path 64 from the antenna 66.

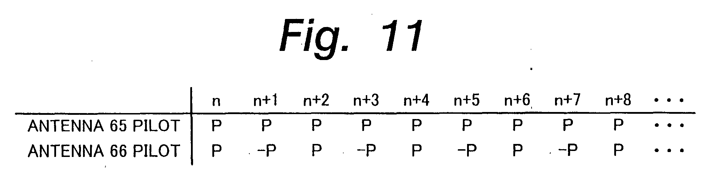

The pilot signal P1 and the pilot signal P2 intersect orthogonally per every two symbols. Therefore, relation of the pilot signal from the antenna 65 and the pilot signal from the antenna 66 form a pattern as shown in fig. 11.

Using the pattern as shown in Fig. 11, the pilot separation section 93 separates components of the pilot signals sent through the propagation paths 63, 64 from the respective antennas 65, 66, as shown below.

$$r\_p[n] = \alpha \times P1[n] + \beta \times P2[n] + noise$$

$$= P1[n] \times (\alpha + \beta) + noise$$

$$r\_p[n+1] = \alpha \times P1[n+1] + \beta \times P2[n+1] + noise$$

$$= P1[n] \times (\alpha - \beta) + noise$$

$$Pr1 = (r\_p[n] + r\_p[n+1]) = \alpha \times P1[n] + noise$$

$$Pr2 = (r\_p[n] - r\_p[n+1]) = \beta \times P2[n] + noise$$

That is, using that the pilot signals P1 and P2 intersect orthogonally per every two symbols, the pilot separation section 93 separates the pilot signal Pr1 through the propagation path 63 from the antenna 65 by adding data of consecutive two symbols in the despread output of the pilot signal output from the pilot despread section 91, and separates the pilot signal Pr2 through the propagation path 64 from the antenna 66 by subtraction of data of consecutive two symbols.

The propagation path estimation section 94 filters the received pilot signal Pr1 and Pr2, individually and separately, to remove noise components by fading, or the like, and multiplies their respective complex conjugates to thereby form propagation path estimation values, respectively.

The data demodulating section 95 uses the data output from the data despread section 92, namely,

$$r\_d[n] = \alpha \times d[n] + \beta \times d\{n+1]^* + noise$$

$$r\_d[n+1] = \alpha \times d[n+1] + \beta \times d[n]^* + noise$$

and uses the propagation path estimation values made by the propagation path estimation section 94, and thereby demodulates transmission data symbols as shown below.

EQUATION 14

$$\hat{D}[n] = \hat{\alpha}^* \times r\_d[n] + \hat{\beta} \times r\_d[n + 1]^*$$

$$\hat{D}[n+1] = \hat{\alpha} \times r\_d[n + 1]^* - \hat{\beta}^* \times r\_d[n]$$

(3) Example of Simultaneous Separation and Filtering of Pilot Signals

In the receiver 62 shown in Fig. 10, the pilot separation section 93 separates the pilot signal Pr1 by adding data of consecutive two symbols in the despread output of the pilot signal output from the pilot despread section 91, and separates the pilot signal Pr2 by subtraction of data of consecutive two symbols. Then, the propagation path estimation section 94 make individual propagation path estimation values by filtering the received pilot signal Pr1 and Pr2 independently and multiplying their complex conjugates individually.

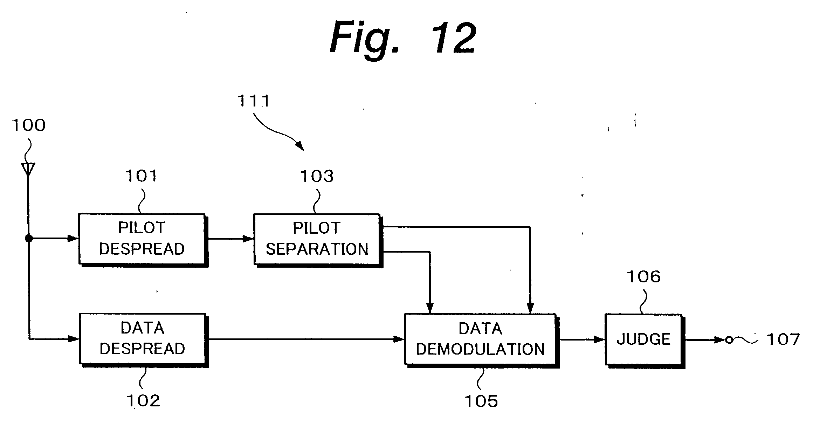

Fig. 12 shows a receiver to which the invention is applied. This example is used in antenna diversity systems, similarly to the receiver 62 shown in Fig. 10. In this example, however, a single pilot separation section 103 executes separation of pilot signals, filtering thereof and creation of propagation path estimation values.

In Fig. 12, the receiver 111 includes a reception antenna 100, pilot despread section 101, data despread section 102, pilot separation section 103, data demodulating section 105, and judge section 106.

The pilot despread section 101, data despread section 102, data demodulating section 105 and data judge section 106 have substantially the same configurations as those of the pilot despread section 91, data despread section 92, data demodulating section 95 and data judge portion 96 in Fig. 10.

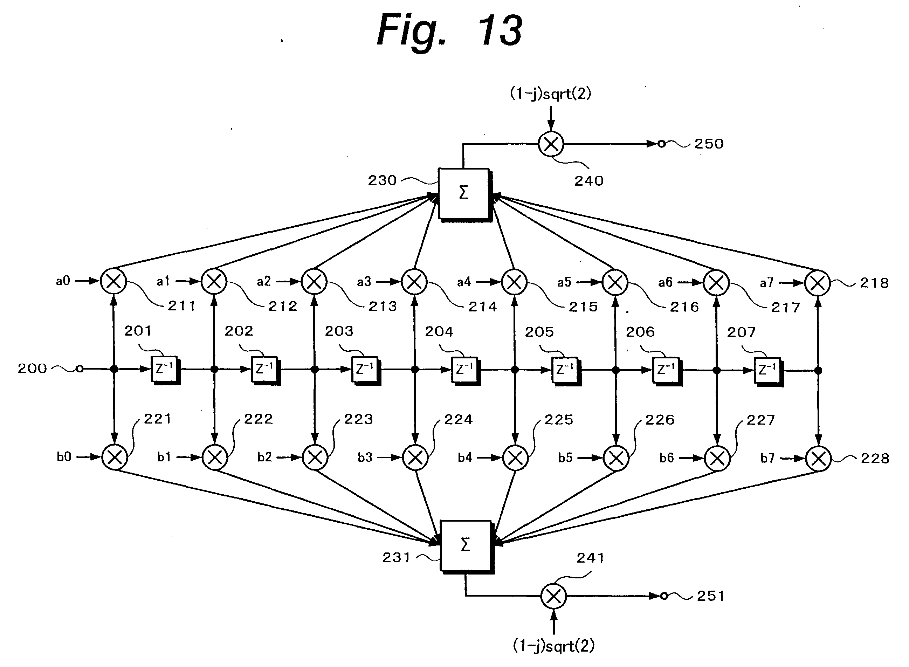

As shown in Fig. 13, the pilot separation section 103 includes delay elements 201 through 209, multipliers 211 through 218, multipliers 221 through 228, adders 230, 231, and multipliers 240, 241.

A signal from the input terminal 200 is supplied to the delay elements 201 through 206, serially connected, and tap outputs are obtained from between respective delay elements 201 through 209. The tap outputs are supplied to the multipliers 211 through 218 and multipliers 221 through 228.

The multipliers 211 through 218 are supplied with coefficients a0 through a7. The multipliers 221 through 228 are supplied with coefficients b0 through b7.

Outputs of the multipliers 211 through 218 are supplied to the adder 230. Output of the adder 230 is supplied to the multiplier 240. The multiplier 240 is also supplied with a complex conjugate of the pilot signal P1. Output of the multiplier 240 is released from the output terminal 250.

Outputs of the multipliers 221 through 228 are supplied to the adder 231. Output of the adder 231 is supplied to the multiplier 241. The multiplier is also supplied with a complex conjugate of the pilot signal P2. Output of the multiplier 241 is released from the output terminal 251.

Here is remarked that the pilot signal P1 and the pilot signal P2 intersect orthogonally not only per every two symbols but also per every four symbols or every eight symbols. That is, as already explained, the pilot signal P1 and the pilot signal P2 intersects per every two symbols, and the pattern of pilot signal from two antennas is as shown in Fig. 11.

It will be appreciated from Fig. 11 that such pilot signals P1 and P2 are related to intersect orthogonally not only per every two symbols, but also per every L symbols (four symbols, eight symbols, 16 symbols, and so forth).

As already explained, by using that the pilot signal P1 and the pilot signal P2 intersect orthogonally per every two symbols, the pilot signal P1 and the pilot signal P2 can be separated by addition and subtraction of consecutive two symbol data.

If it is used that the pilot signal P1 and the pilot signal P2 intersect orthogonally per every four symbols, the pilot signal P1 and the pilot signal P2 can be separated by addition or subtraction of consecutive four symbol data.

Similarly, if it is used that the pilot signal P1 and the pilot signal P2 intersect orthogonally per every eight symbols, the pilot signal P1 and the pilot signal P2 can be separated by addition or subtraction of consecutive four symbol data.

In the case where the pilot signal P1 and the pilot signal P2 are separated by addition or subtraction of consecutive four symbol data, using that they intersect orthogonally per every four symbols, it results in being equivalent to averaging of every two symbol data of the pilot signals P1 and P2 separated per every two symbols.

That is, in the case where the pilot signal P1 and the pilot signal P2 are separated by addition or subtraction of consecutive four symbol data, using that the pilot signal P1 and the pilot signal P2 intersects orthogonally per every four symbols, it results in being equivalent to the pilot signal P1 and the pilot signal P2 being separated and filtered.

Further, in the case where the pilot signal P1 and the pilot signal P2 are separated by addition or subtraction of consecutive eight symbol data, using that the pilot signal P1 and the pilot signal P2 intersects orthogonally per every eight symbols, it results in being equivalent to the pilot signal P1 and the pilot signal P2 being separated and filtered more strictly.

The pilot separation section 103 shown in Fig. 13 can be switched among separation of the pilot signal P1 and the pilot signal P2 by addition or subtraction of two consecutive symbol data, separation of the pilot signal P1 and the pilot signal P2 by addition of subtraction of four consecutive symbol data and separation of the pilot signal P1 and the pilot signal P2 by addition of subtraction of eight consecutive symbol data, depending on the manner of applying the coefficients a0 through a7 and the coefficients b0 through b7 that are applied to the multipliers 211 through 218 and the multipliers 221 through 228.

That is, in the pilot separation section 103 shown in Fig. 13, when the coefficients a0 through a7 and the coefficients b0 through b7 are determined as

$$[a0, a1, a2, a3, a4, a5, a6, a7]$$

$$= (1, 1, 0, 0, 0, 0, 0, 0]$$

$$[b0, b1, b2, b3, b4, b5, b6, b7]$$

$$= [1, -1, 0, 0, 0, 0, 0, 0]$$

the pilot signal P1 and the pilot signal P2 are separated by addition or subtraction of two symbol patterns. In this case, although the pilot signals P1 and P2 are separated, filtering is not performed.

When the coefficients a0 through a7 and the coefficients b0 through b7 are determined as

$$[a0, a1, a2, a3, a4, a5, a6, a7]$$

$$= [1, 1, 1, 1, 0, 0, 0, 0]$$

$$[b0, b1, b2, b3, b4, b5, b6, b7]$$

$$= [-1, 1, -1, 1, 0, 0, 0, 0]$$

the pilot signal P1 and the pilot signal P2 are separated by addition or subtraction of four symbol patterns. In this case, the pilot signals P1 and P2 are separated, and filtering is performed simultaneously.

When the coefficients a0 through a7 and the coefficients b0 through b7 are determined as

$$[a0, a1, a2, a3, a4, a5, a6, a7]$$

$$= [1, 1, 1, 1, 1, 1, 1, 1]$$

$$[b0, b1, b2, b3, b4, b5, b6, b7]$$

$$= [-1, 1, -1, 1, -1, 1, -1, 1]$$

the pilot signal P1 and the pilot signal P2 are separated by addition or subtraction of eight symbol patterns. In this case, the pilot signals P1 and P2 are separated, and stricter filtering is performed simultaneously.

The separated pilot signals P1 and P2 are output from the adders 230, 231. Outputs of the adders 230, 231 are supplied to the multipliers 240, 241. The multipliers 240, 241 multiply complex conjugates on the pilot signals P1, P2, respectively. As a result, path estimation values are obtained. The path estimation values are output from the output terminals 250, 251.

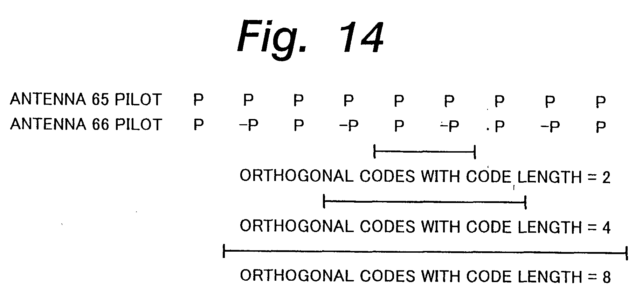

In the pilot separation section 103 shown in Fig. 13, it is possible to preset, as shown in Fig. 14, separation of the pilot signal P1 and the pilot signal P2 by addition or subtraction of two symbol patterns, separation of the pilot signal P1 and the pilot signal P2 by addition or subtraction of four symbol patterns and separation of the pilot signal P1 and the pilot signal P2 by addition or subtraction of eight symbol patterns, depending upon the manner of applying the coefficients a2 through a7 and the coefficients b0 through b7.

In case of separation of the pilot signal P1 and the pilot signal P2 by addition or subtraction of four symbol patterns, separation and filtering of the pilot signals occur simultaneously, and incase of separation of the pilot signal aP1 and the pilot signal P2 by addition or subtraction of eight symbol patterns, separation of more strict filtering of the pilot signals occur simultaneously. Therefore, later filtering is not necessary.

Properties may be switched depending upon the noise level to perform separation of the pilot signal P1 and the pilot signal P2 by addition or subtraction of two symbol patterns when the noise is little, perform separation of the pilot signal P1 and the pilot signal P2 by addition or subtraction of four symbol patterns when the noise is more but still little, and perform separation of the pilot signal P1 and the pilot signal P2 by addition or subtraction of two symbol patterns when the noise is large.

The example of Fig. 13 is configured to perform separation of the pilot signal P1 and the pilot signal P2 by addition or subtraction of two symbol patterns, separation of the pilot signal P1 and the pilot signal P2 by addition or subtraction of four symbol patterns, and separation of the pilot signal P1 and the pilot signal P2 by addition or subtraction of eight symbol patterns. However, the number of taps of the delay elements may be increased to enable separation of the pilot signal P1 and the pilot signal P2 by addition or subtraction of 16 symbol patterns, separation of the pilot signal P1 and the pilot signal P2 by addition or subtraction of 32 symbol patterns, or even more, as well.

(4) Example of Simultaneous Despread, Separation and Filtering of Pilot Signals

In the foregoing examples, upon despread of pilot signals on the part of a receiver, the received signal and the pilot signal spread code are multiplied to accumulate data of M chips (M is the spread code length). In this case, data is despread, one symbol by one symbol.

In this example, despread is performed by for example (Mx2) chips instead of in M chips. Thereby, despread of pilot signals and separation of pilot signals can be executed simultaneously.

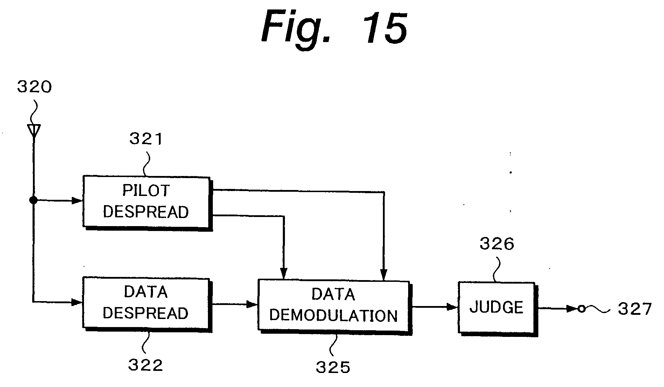

Fig. 15 shows a received of this type. In Fig. 15, the receiving apparatus 311 includes a reception antenna 320, pilot despread section 321, data despread section 322, data demodulating section 325, and judge section 326.

The data demodulating section 325 and data judge section 326 have substantially the same configurations as those of the data demodulating section 95 and data judge portion 96 in Fig. 10.

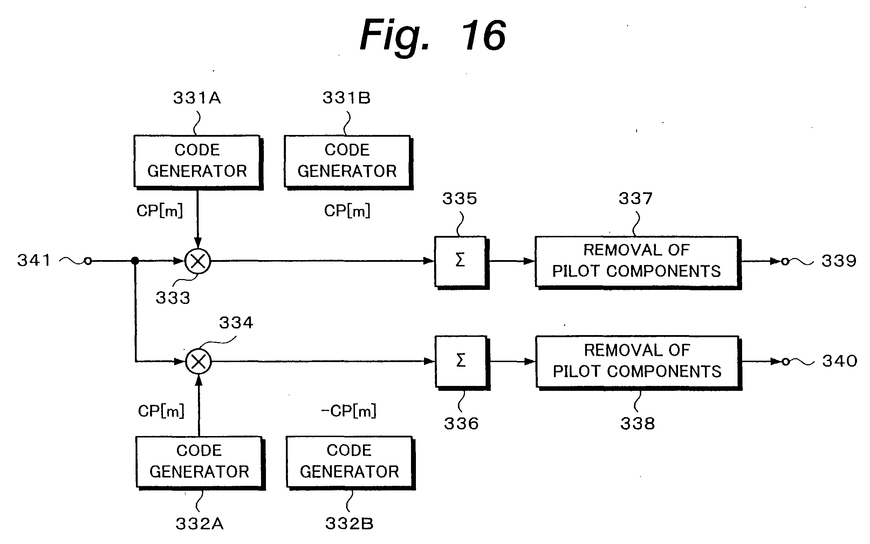

As shown in Fig. 16, the pilot despread section 321 includes code generators 331A, 331B, code generators 332A, 332B, multipliers 333, 334, accumulators 335, 336, and pilot component removers 337, 338.

The code generators 331A, 331B generate pilot signal spread codes Cp[m]. The code generators 332A, 332B generate pilot signal spread codes Cp[m] and - Cp[m]. Although the code generators 331A, 331B, and the code generators 332A, 332B are illustrated separately for the purpose of explaining execution of despread by (Mx2) chips, the concept can be realized with a single code generator.

The accumulators 335, 336 accumulate (Mx2) chips of outputs from the multipliers 333, 334.

A received signal from the antenna 32 is supplied to the input terminal 341. This signal is supplied to the multiplier 333 and further to the multiplier 334. The multiplier 333 multiplies the M-chip received signal by the spread code Cp[m], and multiplies the next M-chip received signal by the spread code Cp[m]. Outputs of the multiplier 333 are supplied to the accumulator 335, and the accumulator 335 accumulates (Mx2) chips of outputs from the multipliers 333.

The multiplier 334 multiplies the M-chip received signal by the spread code Cp[m], and multiplies the next M-chip received signal by the spread code -Cp[m]. Outputs of the multipliers 334 are supplied to the accumulator, and the accumulator 336 accumulates (Mx2) chip of outputs from the multiplier 334.

In this manner, the multiplier 333 is supplied with the codes, [Cp[m], Cp[m]], having the code length of (Mx2) chips, such that the codes and the input signal rp[m] are multiplied and accumulated up to the (Mx2) chips in the accumulator 335. Therefore, the following output is obtained from the accumulator 335.

EQUATION 15

$$
\begin{aligned}
acc\_1 &= \sum_{m=0}^{2 \times M - 1} rp[m] \times C[m] \\
&= \sum_{m=0}^{M-1} rp[m] \times Cp[m] + \sum_{m=0}^{M-1} rp[m + M] \times Cp[m] \\
&= \sum_{m=0}^{M-1} (\alpha \times P \times Cp[m] + \beta \times P \times Cp[m]) \times Cp[m] \\
&\quad + \sum_{m=0}^{M-1} (\alpha \times P \times Cp[m] - \beta \times P \times Cp[m]) \times Cp[m] \\
&= 2 \times \alpha \times P \times M + noise
\end{aligned}
$$

On the other hand, the multiplier 334 is supplied with the codes, [Cp[m], -Cp[m]], having the code length of (Mx2) chips, such that the codes and the input signal rp[m] are multiplied and accumulated up to the (Mx2) chips in the accumulator 336. Therefore, the following output is obtained from the accumulator 336.

## EQUATION 16

$$acc\_2 = \sum_{m=0}^{2\times M-1} rp[m] \times C[m]$$

$$= \sum_{m=0}^{M-1} rp[m] \times Cp[m] - \sum_{m=0}^{M-1} rp[m+M] \times Cp[m]$$

$$= \sum_{m=0}^{M-1}(\alpha \times P \times Cp[m] + \beta \times P \times Cp[m] + noise) \times Cp[m]$$

$$- \sum_{m=0}^{M-1}(\alpha \times P \times Cp[m] - \beta \times P \times Cp[m] + noise) \times Cp[m]$$

$$= 2 \times \beta \times P \times M + noise$$

Further, by multiplying complex conjugates in the pilot component removers 367, 338, the following propagation properties can be obtained from respective antennas.

## EQUATION 17

$$\hat{\alpha} = acc\_1 \times P^* = 2 \times \alpha \times M + noise$$

$$\hat{\beta} = acc\_2 \times P^* = 2 \times \beta \times M + noise$$

By executing despread by (Mx2) chips in this manner, processing equivalent to addition or subtraction of two consecutive symbols obtained by despread, and despread and separation of pilot signals can be achieved simultaneously.

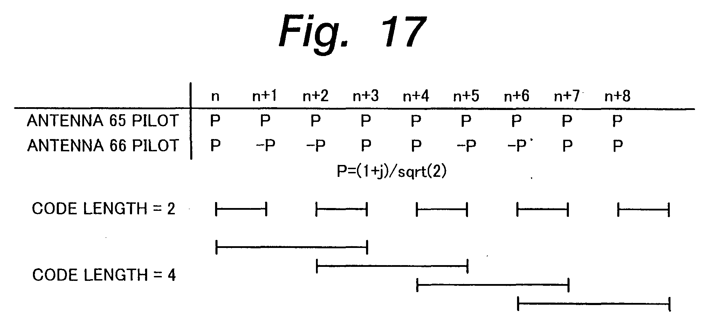

Additionally, although the above example executes despread by (Mx2) chips, since the pilot signal P1 and the pilot signal P2 intersect orthogonally not only per every two symbols, but also per every four symbols or every eight symbols, despread may be made by (Mx4) chips as shown in Fig. 17. In this manner, also filtering for removal of noise can be achieved simultaneously.

More specifically, in case the code length is L, it can be expressed as follows.

$$\hat{\alpha} = L \times \alpha \times M + noise$$

$$\hat{\beta} = L \times \beta \times M + noise$$

The signal-to-noise ratio at that time is (L/2) times that of the case where the pilot code length is 2, because the signal components are L/2 times.

Therefore, when the value of L is increased, filtering for removal of noise is not required, and the transmission path estimation section can be omitted.

The length of the code used for despread can be changed simply by changing outputs of the code generators 331A, 331B, 332A and 332B and numbers of accumulation of the accumulators 335 and 336. Therefore, the code length may be switched depending on the required level of noise removal, among L=8 in case of requiring strict noise removal, L=2 in case of requiring no noise removal, and so on.

The pilot signal P1 and the pilot signal P2 intersect orthogonally per every two symbols. Further, the pilot signal P1 and the pilot signal P2 are related to intersect orthogonally not only per every two symbols, but also per every four symbols, every eight symbols, every 16 symbols, or even more.

In the present invention, by using that the pilot signal P1 and the pilot signal P2 intersect orthogonally per every four symbols or every eight symbols, the pilot signal P1 and the pilot signal P2 can b e separated by addition or subtraction of four or eight consecutive symbol data. It results in being equivalent to averaging the pilot signals P1 and P2 separated per every two symbols, and separation of the pilot signals and filtering can be achieved simultaneously.

Filtering properties can be switched depending upon the noise level so as to select separation of the pilot signal P1 and the pilot signal P2 by addition or subtraction of two symbol patterns when the noise is little, select separation of the pilot signal P1 and the pilot signal P2 by addition or subtraction of four symbol patterns when the noise is more but still little, and select separation of the pilot signal P1 and the pilot signal P2 by addition or subtraction of two symbol patterns when the noise is large.

Further, in the present invention, by employing (Mx2) chips, instead of M chips, upon spreading the pilot signals, processing equivalent to addition or subtraction of consecutive two symbols obtained by despread can be achieved, and despread and separation of pilot signals can be effected simultaneously.

Furthermore, if despread is executed by (MxL) chips, despread of pilot signals, separation of pilot signals and filtering can be achieved simultaneously. Additionally, depending upon the noise level, filtering properties can be switched by changing the magnitude of L.

Having described a specific preferred embodiment of the present invention with reference to the accompanying drawings, it is to be understood that the invention is not limited to that precise embodiment, and that various changes and modifications may be effected therein by one skilled in the art without departing from the scope or the spirit of the invention as defined in the appended claims.

**Claims**

1. A receiving apparatus in a system configured to take procedures of:

   on the part of a transmitter, coding data signals into a first series and a second series and spreading each said series with data spread codes;
   spreading two pilot signals individually for said first series and said second series into pilot signal spread codes for individual said first and second series;
   combining the spread data signal of said first series and the spread pilot signal of said first series, and transmitting them from a first antenna;
   combining the spread data signal of said second series and the spread pilot signal of said second series, and transmitting them from a second antenna;
   on the part of a receiver, despreading the received data signals with data spread codes;
   despreading the received pilot signals with the pilot spread codes, and separating components of first series pilot signal and components of the second series pilot signal from a despread output of the pilot signal;
   obtaining an estimation value of the property of said first series and an estimation value of the property of said second series from components of the first series pilot signal and the second series pilot signal; and
   demodulating the despread data signals by using the estimated value of the property of the first series and the estimated value of the property of the second series, comprising:

   data spread means for executing despread of the received data signals;
   pilot signal despread means for executing despread of the received pilot signals;
   pilot separation means using orthogonality between the first series pilot signal and the second series pilot signal to separate components of the first series pilot signal and components of the second series pilot signal from outputs of said pilot signal despread means and to obtain an estimated value of the property of the first series and an estimated value of the property of the second series from the components of said first series pilot signal and the components of said second series pilot signal; and
   data demodulating means using the estimated value of the property of said first series and the estimated of the property of said second series obtained by said pilot separation means to demodulate the despread data signals,
   said pilot separation means being configured to separate the components of said first series pilot signal and components of said second pilot signal component by using pilot signals of patterns having the number of symbol L where L is the number of symbols per which said first series pilot signal and said second series pilot signal intersect orthogonally.

2. A receiving apparatus according to claim 1 wherein, depending on the value of the number of symbols L, separation of the components of said first series pilot signal and the components of said second series pilot signal from each other, and removal of noise components contained in said components of the first series pilot signal and said components of the second series pilot signal can be achieved simultaneously.

3. A receiving apparatus according to claim 1 or 2 wherein the number of symbols L can be switched to change the property of removal of noise components contained in the components of the first series pilot signal and the components of the second series pilot signal.

4. A receiving apparatus according to any one of the preceding claims wherein the number of symbols L can be switched depending on the noise level.

5. A receiving apparatus in a system configured to take procedures of:

on the part of a transmitter, coding data signals into a first series and a second series and spreading each said series with data spread codes;

spreading two pilot signals individually for said first series and said second series into pilot signal spread codes for individual said first and second series;

combining the spread data signal of said first series and the spread pilot signal of said first series, and transmitting them from a first antenna;

combining the spread data signal of said second series and the spread pilot signal of said second series, and transmitting them from a second antenna;

on the part of a receiver, despreading the received data signals with data spread codes;

despreading the received pilot signals with the pilot spread codes, and separating components of first series pilot signal and components of the second series pilot signal from a despread output of the pilot signal;

obtaining an estimation value of the property of said first series and an estimation value of the property of said second series from components of the first series pilot signal and the second series pilot signal; and

demodulating the despread data signals by using the estimated value of the property of the first series and the estimated value of the property of the second series, comprising:

data spread means for executing despread of the received data signals;

pilot signal despread means for executing despread of the received pilot signals, separating components of first series pilot signal and components of the second series pilot signal from a despread output of the pilot signal, and obtaining an estimation value of the property of said first series and an estimation value of the property of said second series from components of the first series pilot signal and the second series pilot signal; and

data demodulating means using the estimated value of the property of said first series and the estimated of the property of said second series obtained by said pilot separation means to demodulate the despread data signals,

said pilot signal despread means being configured to execute despread of the pilot signals and separate the components of said first series pilot signal and the components of said second pilot signal from each other by multiplying a pilot signal spread code having the length L times the spread code length and accumulating multiplication outputs in the amount of the length L times the spread code length where L is the number of symbols per which said first series pilot signal and said second series pilot signal intersect orthogonally.

6. A receiving apparatus according to claim 5 wherein, depending on the value of the number of symbols L, separation of the components of said first series pilot signal and the components of said second series pilot signal from each other, and removal of noise components contained in said components of the first series pilot signal and said components of the second series pilot signal can be achieved simultaneously.

7. A receiving apparatus according to claim 5 or 6 wherein the number of symbols L can be switched to change the property of removal of noise components contained in the components of the first series pilot signal and the components of the second series pilot signal.

8. A receiving apparatus according to any one of claims 5 to 7 wherein the number of symbols L can be switched depending on the noise level.

EP 1 164 711 A2

# Fig. 1

# *Fig. 2*

TRANSMISSION
DATA

→ I

→ Q

● (−1+j)/sqrt(2)    ● (1+j)/sqrt(2)

● (−1−j)/sqrt(2)    ● (1−j)/sqrt(2)

# *Fig. 3*

M-chip

1-chip

SPREAD CODE Cd[m]

INPUT
D[n]

OUTPUT
D[n] × Cd[m]

31

# Fig. 4

M-chip

1-chip

SPREAD CODE Cd[m]

INPUT
P[n] → ⊗ → OUTPUT
P[n] × Cp[m]

32

# Fig. 5

CODE GENERATOR

35

SPREAD CODE Cd[m]

INPUT → ⊗ → Σ → OUTPUT

$\alpha \times (D[n] \times Cd[m] + P[n] \times Cp[m])$

$\sum_{m}^{M-1} \alpha \times (D[n] \times Cd[m] + P[n] \times Cp[m]) \times Cd[m]$

$= \alpha \times M \times D[n]$

34

# Fig. 6

CODE GENERATOR

SPREAD CODE Cd[m]

38

INPUT $\longrightarrow$ $\otimes$ $\longrightarrow$ $\Sigma$ $\longrightarrow$ OUTPUT

$\alpha \times (D[n] \times Cd[m] + P[n] \times Cp[m])$

37

$$\sum_{m}^{M-1} \alpha \times (D[n] \times Cd[m] + P[n] \times Cp[m]) \times Cp[m]$$
$$= \alpha \times M \times P[n]$$

# Fig. 7

41     42     43     44

57 $\longrightarrow$ $Z^{-1}$ $\longrightarrow$ $Z^{-1}$ $\longrightarrow$ $Z^{-1}$ $\longrightarrow$ $Z^{-1}$

51     52     53     54     55

56

$\Sigma$

58

# Fig. 8

# Fig. 9

EP 1 164 711 A2

# Fig. 10

## Fig. 11

|                 | n | n+1 | n+2 | n+3 | n+4 | n+5 | n+6 | n+7 | n+8 | • • • |
|-----------------|---|-----|-----|-----|-----|-----|-----|-----|-----|-------|
| ANTENNA 65 PILOT | P | P | P | P | P | P | P | P | P | • • • |
| ANTENNA 66 PILOT | P | −P | P | −P | P | −P | P | −P | P | • • • |

# Fig. 12

```
         101              103
    ┌──────────┐     ┌──────────┐
    │  PILOT   │     │  PILOT   │
    │ DESPREAD │ ──→ │SEPARATION│
    └──────────┘     └──────────┘

    ┌──────────┐     ┌──────────────┐     ┌────────┐
    │   DATA   │     │     DATA     │     │ JUDGE  │ ──→o  107
    │ DESPREAD │ ──→ │ DEMODULATION │ ──→ └────────┘
    └──────────┘     └──────────────┘       106
         102              105
```

100

111

# Fig. 13

EP 1 164 711 A2

# Fig. 14

ANTENNA 65 PILOT    P    P    P    P    P    P    P    P    P
ANTENNA 66 PILOT    P   -P    P   -P    P   -P    P   -P    P

|———————|

ORTHOGONAL CODES WITH CODE LENGTH = 2

|————————————|

ORTHOGONAL CODES WITH CODE LENGTH = 4

|————————————————————————|

ORTHOGONAL CODES WITH CODE LENGTH = 8

EP 1 164 711 A2

# Fig. 15

EP 1 164 711 A2

# Fig. 16

# Fig. 17

| | n | n+1 | n+2 | n+3 | n+4 | n+5 | n+6 | n+7 | n+8 |
|---|---|---|---|---|---|---|---|---|---|
| ANTENNA 65 PILOT | P | P | P | P | P | P | P | P | P |
| ANTENNA 66 PILOT | P | −P | −P | P | P | −P | −P | P | P |

$$P=(1+j)/\text{sqrt}(2)$$

CODE LENGTH = 2

CODE LENGTH = 4

EP 1 164 711 A2